# EUROPÄISCHE PATENTANMELDUNG

(11) **EP 3 654 009 A2**
(43) Veröffentlichungstag der Anmeldung: **20.05.2020**
(21) Anmeldenummer: 19209066.0
(22) Anmeldetag: 14.11.2019
(51) Int. Cl.: G01M 3/28

(54) **ANORDNUNG UND VERFAHREN ZUM DETEKTIEREN VON LECKAGEN IN EINEM WASSERLEITUNGSSYSTEM**

(30) Priorität: 16.11.2018 DE 102018128855
(71) Anmelder: Viega Technology GmbH & Co. KG, 57439 Attendorn (DE)
(72) Erfinder: Winterholler, Arthur, 57439 Attendorn (DE); Stähler, Ben, 57223 Kreuztal (DE); Rischen, Christian, 59889 Eslohe (DE)
(74) Vertreter: Cohausz & Florack

(57) **Zusammenfassung**

Die Erfindung betrifft eine Anordnung zum Detektieren und Orten einer Leckage in einem Wasserleitungssystem, mit einer Wasseraufbereitung (4), mit einer Pumpe (5), mit einer Zuleitung (6) und einer Ableitung (8), mit mindestens einer an der Zuleitung (6) und der Ableitung (8) angeschlossenen Zirkulationsleitung (10, 12, 14), mit mindestens einem Eingangsventil (16, 18, 20, 21), mindestens einem Ausgangsventil (22, 24, 26, 27) und mindestens einem Drucksensor (28, 30, 32, 33) in mindestens einer Zirkulationsleitung (10, 12, 14) und/oder der Zuleitung (6) und der Ableitung (8), wobei das Eingangsventil (16, 18, 20, 21) und das Ausgangsventil (22, 24, 26, 27) elektrisch steuerbar, mit Steuermittel (34) zum Ansteuern der Eingangsventile (16, 18, 20, 21) und der Ausgangsventile (22, 24, 26, 27), mit Erfassungsmitteln (36) zum Erfassen des zeitlichen Verlaufs der Messwerte (P) des mindestens einen Drucksensors (28, 30, 32, 33), mit Auswertemitteln (38) zum Auswerten des zeitlichen Verlaufs der Druckveränderung (dP/dt) und zum Vergleichen des Betrags der Druckveränderung (dP/dt) mit einem Grenzwert und mit Ausgabemitteln (40) zum Ausgeben eines eine Leckage anzeigenden Anzeigesignals, wenn der Betrag der Druckveränderung (dP/dt) den Grenzwert überschreitet. Diese Anordnung löst das technische Problem, das Detektieren und gegebenenfalls Orten einer Leckage zu verbessern.

## Beschreibung

Die Erfindung betrifft eine Anordnung und ein Verfahren zum Detektieren und ggf. Ortung von Leckagen in einem Wasserleitungssystem.

In Wasserleitungssystemen bzw. allgemein in medienführenden Systemen treten Leckagen unvermeidbar im Laufe des Betriebs auf. Die Leckagen bekommen eine zunehmend größere Bedeutung, da damit im Trinkwassernetz die größte Bedrohung für Haushalte und Gebäude verbunden sind. Die Ursachen sind dabei sehr vielfältig, da sie durch viele Parameter beeinflusst werden und sich auch regional, z.B. beeinflusst durch die Wasserzusammensetzung, unterscheiden können. Speziell die Mikro-Leckagen, wie beispielsweise ein tropfender Wasserhahn mit einer Durchflussmenge von 0,04 1/min, sind aufgrund der geringen Menge jedoch sehr schwer zu detektieren.

Um Schäden zu verhindern, werden zunehmend mehr Leckage-Systeme in den Installationen integriert. Um die Leckage möglichst gering zu halten werden Schutzsysteme mit einer Absperrarmatur kombiniert, die bei auftretender Leckage das System absperren.

Weitere Ausführungen von Leckage-Systemen arbeiten mit einem Feuchtesensor, der in kritischen Bereichen, wie einem Waschraum, auf dem Boden platziert wird. Ab einer gewissen Wasserhöhe schlägt das System an. Für große Leckagen (Rohrbruch 20 l/min) ist dieses System gut geeignet. Kleine Leckagen in der Wand werden mit diesem Verfahren gar nicht oder sehr spät erkannt.

Alle bekannten Systeme, die mittels Druck und Durchfluss eine Leckage detektieren, beschränken sich auf Kaltwasserleitungen ohne Zirkulation. In kritischen Bereichen werden Wasserfühler eingesetzt, die elektrisch leitfähige Flüssigkeiten erkennen. Die Leckage-Ortung erfolgt dann beispielsweise mittels akustischer Ortung, Endoskopie, thermografischer Ortung oder Kameras. Dabei stellen sich die Nachteile heraus, dass die Detektion und die Ortung zwei unterschiedliche Vorgänge sind, die zeitlich weit auseinander liegen, wodurch ein hoher Schaden entsteht. Zudem können Schäden, bei denen nur kleine Mengen entweichen, dies aber über einen längeren Zeitraum, auf diese Weise gar nicht registriert werden.

Der Erfindung liegt daher das technische Problem zugrunde, das Detektieren und gegebenenfalls Orten einer Leckage zu verbessern.

Das zuvor aufgezeigte technische Problem wird durch eine Anordnung zum Detektieren und Orten einer Leckage in einem Wasserleitungssystem gelöst mit einer Wasseraufbereitung, mit einer Pumpe, mit einer Zuleitung und einer Ableitung, mit mindestens einer an der Zuleitung und der Ableitung angeschlossenen Zirkulationsleitung, mit mindestens einem Eingangsventil, mindestens einem Ausgangsventil und mindestens einem Drucksensor in mindestens einer Zirkulationsleitung und/oder der Zuleitung und der Ableitung, wobei das Eingangsventil und das Ausgangsventil elektrisch steuerbar sind, mit Steuermittel zum Ansteuern der Eingangsventile und der Ausgangsventile, mit Erfassungsmitteln zum Erfassen des zeitlichen Verlaufs der Messwerte (P) des mindestens einen Drucksensors, mit Auswertemitteln zum Auswerten der zeitlichen Druckveränderung (dP/dt) und zum Vergleichen des Betrags der Druckveränderung (dP/dt) mit einem Grenzwert und mit Ausgabemitteln zum Ausgeben eines eine Leckage anzeigenden Anzeigesignals, wenn der Betrag der Druckveränderung (dP/dt) den Grenzwert überschreitet.

Eine oben erwähnte Wasseraufbereitung dient einem Kühlen oder Erwärmen des in dem Wasserleitungssystem geführten Wassers und kann beispielsweise als Speicherbehälter mit einer Heiz- oder Kühleinrichtung oder als Durchflusswärmetauscher ohne Speicherbehälter ausgebildet sein.

Mit der zuvor erläuterten Anordnung kann das folgende Verfahren ausgeführt werden.

Das oben aufgezeigte technische Problem wird auch durch ein Verfahren zum Detektieren und Orten einer Leckage in einem Wasserleitungssystem gelöst, bei dem während einer Lernphase das zeitliche Nutzungsverhalten anhand der Wasserentnahmen aus zumindest einem Abschnitt eines Leitungssystems bestimmt wird, bei dem mindestens ein Zeitfenster bestimmt wird, in dem die Wahrscheinlichkeit der Entnahme von Wasser aus dem Abschnitt minimal ist, bei dem bei Erreichen des Zeitfensters ein Prüfmodus aktiviert wird, bei dem zu Beginn des Prüfmodus ein Abschnitt mittels zweier Ventile abgesperrt wird, bei dem der Wasserdruck in dem Abschnitt über eine vorgegebene Zeitdauer gemessen und die Druckveränderung (dP/dt) berechnet wird, bei dem die Druckveränderung (dP/dt) mit einem Grenzwert verglichen wird und bei dem dann, wenn der Betrag der Druckveränderung (dP/dt) den Grenzwert überschreitet, eine Leckage festgestellt wird und der Ort der Leckage zwischen den beiden Ventilen geortet wird.

Das oben aufgezeigte technische Problem wird auch durch ein Verfahren zum Detektieren und Orten einer Leckage in einem Wasserleitungssystem gelöst, bei dem während einer Lernphase ein stationärer Nenndruck (Pn) in Zeiträumen bestimmt wird, in denen keine Wasserentnahmen aus zumindest einem Abschnitt eines Leitungssystems auftritt, bei dem dann, wenn im laufenden Betrieb der stationäre Nenndruck (Pn) nicht erreicht wird, ein Prüfmodus aktiviert wird, bei dem zu Beginn des Prüfmodus ein Abschnitt mittels zweier Ventile abgesperrt wird, bei dem der Wasserdruck in dem Abschnitt über eine vorgegebene Zeitdauer gemessen und die Druckveränderung (dP/dt) berechnet wird, bei dem die Druckveränderung (dP/dt) mit einem Grenzwert verglichen wird und bei dem dann, wenn der Betrag der Druckveränderung (dP/dt) den Grenzwert überschreitet, eine Leckage festgestellt wird und der Ort der Leckage zwischen den beiden Ventilen geortet wird.

Somit kann mittels eines, insbesondere periodisch durchgeführten, Differenzdruckverfahren eine Leckage einfach und sicher detektiert und ggf. auch geortet werden. Je feinmaschiger die Ventile bzw. Absperrarmaturen und Drucksensoren im Wasserleitungssystem platziert werden, desto genauer kann die Leckage geortet werden.

Bei den zuvor beschriebenen Ausführungsformen beträgt der Grenzwert zwischen 5 und 10 mbar/min. Dieser Grenzwert ist abhängig vom System und insbesondere von der Wasservolumen (V) im System, dem Nenndruck (Pn) und der zu detektierenden Leckagerate (Q). Mit den beispielhaften Werten V=3 Liter, Pn=4 bar und Q= 0,04 l/min ergibt sich ein Wert von 10 ml/min.

Das oben aufgezeigte technische Problem wird auch durch ein Verfahren zum Detektieren einer Leckage in einem Wasserleitungssystem gelöst, bei dem während einer Lernphase mittels einer Pumpe Wasser durch das Wasserleitungssystem gepumpt wird, wobei mindestens ein Wert einer Fördermenge vorgegeben wird, bei dem für jede der mindestens einen Fördermenge die stationäre Leistungsaufnahme der Pumpe gemessen und gespeichert wird und bei dem dann, wenn im laufenden Betrieb für eine der vorgegebenen Fördermengen die aktuelle Leistungsaufnahme der Pumpe den Wert der stationären Leistungsaufnahme um ein vorgegebenes Maß unterschreitet, eine Leckage festgestellt wird.

Das zuvor erläuterte Verfahren kann in verschiedener Weise durchgeführt werden. Zum einen kann die Leistungsaufnahme als elektronischer Messwert der Pumpe verwendet werden. Zum anderen kann die Leistungsaufnahme der Pumpe als mathematisches Produkt aus dem am Ausgang der Pumpe gemessenen Druck (Förderdruck) und der Fördermenge bestimmt werden. Ein Beispiel eines Wertepaares für den Förderdruck (dP=90 mbar) und der Fördermenge (Q=300 l/h) errechnet sich die Leistungsaufnahme der Pumpe zu ca. 8,5 Watt. Bei einer Leckage von 0,04 l/min ergibt sich daraus eine dauerhafte Absenkung der Leistungsaufnahme von 0,1 Watt, was mit herkömmlichen Sensoren bzw. Pumpen detektiert werden kann.

Den zuvor beschriebenen Ausführungsformen liegt zunächst die Erkenntnis zugrunde, dass das Wasserleitungssystem im Normalbetrieb fortlaufend oder in vorgegebenen Zeitabständen analysiert wird und mindestens ein sich über die Zeit und die Nutzung des Leitungssystems ändernder Parameter bestimmt wird, der charakteristisch für den stationären Betrieb ohne Vorhandensein einer Leckage ist. Der Parameter kann dabei
- ein Zeitfenster sein, in dem keine Benutzung zu erwarten ist und der Normalbetrieb durch die Differenzdruckprüfung nicht beeinflusst wird,
- ein Nenndruck, der im Wasserleitungssystem an einer Position eines Drucksensors vorhanden ist, oder
- eine stationäre Leistungsaufnahme für eine vorgegebene Fördermenge sein.

Andererseits wird dieser Parameter genutzt, um eine durch eine Leckage hervorgerufene Änderung bzw. Abweichung von dem stationären Zustand des Wasserleitungssystems zu bestimmen.

Wenn der Parameter ein Zeitfenster ist, so wird innerhalb dieses Zeitfensters durch einen Prüfmodus festgestellt, ob ein Druckabfall in einem von zwei Ventilen begrenzten Abschnitt des Wasserleitungssystems auftritt und ob die Größe bzw. der Betrag dieses Druckabfalls einen vorgegebenen Grenzwert überschreitet. Wenn diese Bedingung erfüllt ist, dann wird eine Leckage erkannt und kann dem entsprechenden Abschnitt zugeordnet werden.

Wenn der Parameter ein Nenndruck ist, wird das Wasserleitungssystem fortlaufend überwacht. Wenn festgestellt wird, dass die Pumpe bei vorgegebener Fördermenge den ermittelten Nenndruck nicht an dem zugeordneten Drucksensor erzeugen kann, dann wird eine Leckage in dem Wasserleitungssystem in dem den Drucksensor enthaltenden Abschnitt erkannt. Nachfolgend wird durch einen Prüfmodus festgestellt, ob ein Druckabfall in einem von zwei Ventilen begrenzten Abschnitt des Wasserleitungssystems auftritt und ob die Größe bzw. der Betrag dieses Druckabfalls einen vorgegebenen Grenzwert überschreitet. Wenn diese Bedingung erfüllt ist, dann wird eine Leckage erkannt und kann dem entsprechenden Abschnitt zugeordnet werden.

Wenn der Parameter dagegen eine stationäre Leistungsaufnahme der Pumpe für eine vorgegebene Fördermenge ist, dann wird eine Leckage in dem Wasserleitungssystem dadurch erkannt, dass sich die Leistungsaufnahme der Pumpe verändert und den Wert der stationären Leistungsaufnahme um ein vorgegebenes Maß unterschreitet. Gegebenenfalls kann dann eine zuvor beschriebene Prüfroutine gestartet werden und das Wasserleitungssystem abschnittsweise auf das Vorhandensein einer Leckage überprüft werden.

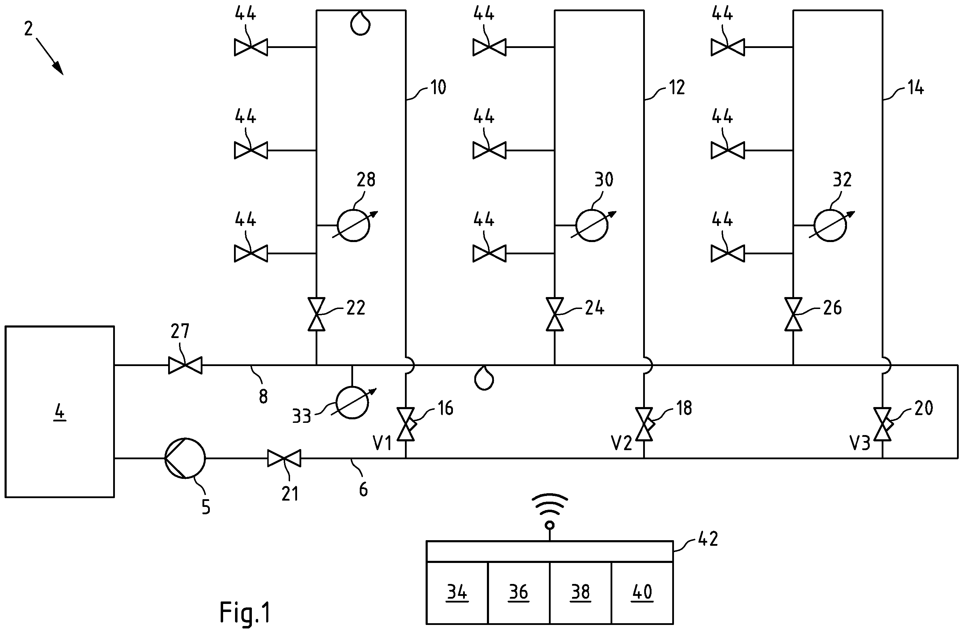

Im Folgenden wird die Erfindung anhand von Ausführungsbeispielen mit Bezug auf die Zeichnung erläutert. In der Zeichnung zeigt die einzige Fig. 1 eine schematische Darstellung einer Anordnung zum Detektieren und Orten einer Leckage in einem Wasserleitungssystem.

Fig. 1 zeigt eine erfindungsgemäße Anordnung 2 zum Detektieren und Orten einer Leckage in einem Wasserleitungssystem, mit einer Wasseraufbereitung 4, das beispielsweise als Warm- oder Kaltwasseraufbereitung oder als Wärmetauscher, insbesondere Durchflusswärmetauscher ausgebildet sein kann und das Wasserleitungssystem mit warmem Trinkwasser versorgt.

Die Anordnung 2 weist weiterhin eine Pumpe 5 sowie eine Zuleitung 6 und eine Ableitung 8, die entweder in einer Etage im Wesentlichen horizontal angeordnet oder als Steig- und Fallleitungen im Wesentlichen vertikal angeordnet sind. Die Zuleitung 6 ist mit der Ableitung 8 strömungstechnisch verbunden.

An der Zuleitung 6 und der Ableitung 8 sind drei Zirkulationsleitungen 10, 12 und 14 angeschlossen, die jeweils ein Eingangsventil 16, 18 und 20, ein Ausgangsventil 22, 24 und 26 und einen Drucksensor 28, 30 und 32 aufweisen. Die Eingangsventile 16, 18 und 20 und die Ausgangsventile 22, 24 und 26 sind elektrisch steuerbar.

Des Weiteren sind in der Zuleitung 6 ein Eingangsventil 21 und in der Ableitung 8 ein Ausgangsventil 27, die ebenfalls elektrisch steuerbar sind, sowie einen Drucksensor 33 vorgesehen.

Des Weiteren sind Steuermittel 34 zum Ansteuern der Eingangsventile 16, 18, 20 und 21 und der Ausgangsventile 22, 24, 26 und 27 und Erfassungsmittel 36 zum Erfassen des zeitlichen Verlaufs der Messwerte (P) der Drucksensoren 28, 30 und 32 vorgesehen. Auswertemittel 38 zum Auswerten des zeitlichen Verlaufs der Druckveränderung (dP/dt) und zum Vergleichen des Betrages der Druckveränderung (dP/dt) mit einem Grenzwert sind vorgesehen und Ausgabemittel 40 zum Ausgeben eines eine Leckage anzeigenden Anzeigesignals, wenn der Betrag der Druckveränderung (dP/dt) den Grenzwert überschreitet, sind zusätzlich in der Anordnung 2 vorgesehen.

In der Fig. 1 sind die Steuermittel 34 als separates Bauteil dargestellt, diese können aber auch in eine der dargestellten Ventile oder Sensoren integriert sein.

Die Steuermittel 34 und die Erfassungsmittel 36 sind über eine Datenverbindung mit den genannten Ventilen 16 bis 27 und Drucksensoren 28 bis 33 verbunden, die drahtlos als Funkverbindung, beispielsweise als WLAN- oder Bluetooth-Verbindung ausgebildet ist. Dazu ist ein Funkmodul 42 vorgesehen, das die Steuersignale bzw. Erfassungssignale überträgt. Die Ventilen 16 bis 27 und Drucksensoren 28 bis 33 sind entsprechend mit Funkmodulen ausgestattet, ohne dass dieses gesondert in Fig. 1 dargestellt ist. Die Datenverbindung kann aber optional auch ganz oder teilweise kabelgebunden ausgebildet sein.

Jede der drei Zirkulationsleitungen 10, 12 und 14 weist drei Wasserentnahmeventile 44 auf, die als Wascharmatur, Duscharmatur, Badewannenarmatur oder als Toilettenspülung ausgebildet sein können. Die Symbole 44 können generell auch als Symbol für eine Nutzungseinheit oder Wohnung dienen.

Nachfolgend werden verschiedene Ausgestaltungen von Verfahren zum Detektieren und Orten einer Leckage in einem Wasserleitungssystem beschrieben, wobei auf das Beispiel der Anordnung nach Fig. 1 Bezug genommen wird.

Die Anordnung 2 nach Fig. 1 wird bei einer Ausgestaltung des Verfahrens zunächst während einer Lernphase so betrieben, dass das zeitliche Nutzungsverhalten anhand der Wasserentnahmen über die Entnahmestellen 44 aus einem Abschnitt oder aus mehreren Abschnitten des Leitungssystems bestimmt wird. Eine Nutzung macht sich dabei als Druckabfall oder als Änderung der Durchflussmenge bemerkbar. Der Zeitraum der Lernphase kann mehrere Tage oder auch mehr als eine Woche betragen. In diesem Zeitraum werden in regelmäßigen Zeitabständen die Druckwerte der Drucksensoren 28 bis 33 mittels der Erfassungsmittel aufgenommen und abgespeichert. Daraus ergibt sich zeitlicher Verlauf der Benutzungsgewohnheiten der Nutzer des Wasserleitungssystems.

Anschließend wird mindestens ein Zeitfenster bestimmt, in dem die Wahrscheinlichkeit der Entnahme von Wasser aus dem Abschnitt minimal ist. Ein solcher Zeitraum wird vermutlich in den späten Nachtstunden liegen, kann aber auch tagsüber auftreten.

Während des Betriebsmodus wird bei Erreichen des Zeitfensters ein Prüfmodus aktiviert, zu dessen Beginn ein Abschnitt mittels zweier Ventile abgesperrt wird. Beispielsweise wird dazu die Zirkulationsleitung 10 geprüft und die Ventile 16 und 22 werden mittels der Steuermittel 34 geschlossen. Dazu senden die Steuermittel 34 entsprechende Steuersignale über die Funkverbindung an die Ventile 16 und 22.

Nach dem Schließen der Ventile 16 und 22 wird der Wasserdruck in dem Abschnitt der Zirkulationsleitung 10 über eine vorgegebene Zeitdauer von beispielsweise 1 bis 3 Stunden gemessen, in dem die Erfassungsmittel 36 über die Funkverbindung in regelmäßigen Zeitabständen von beispielsweise einer Minute oder wenigen Minuten die jeweiligen Druckwerte des Drucksensors 28 auslesen und somit erfassen. Die Druckwerte werden mit entsprechenden Zeitwerten abgespeichert, so dass bereits während und/oder nach Abschluss des Prüfmodus die Druckveränderung (dP/dt) als zeitlicher Druckverlauf berechnet wird.

Dieselbe Prüfroutine kann mit den Ventilen 18 und 24 für die Zirkultionsleitung 12 oder mit den Ventilen 20 und 26 für die Zirkulationsleitung 14 durchgeführt werden.

Zum Detektieren einer Leckage in der Zirkulationsleitung 10 wird dann die Druckveränderung (dP/dt) mit einem Grenzwert verglichen und dann, wenn der Betrag der Druckveränderung (dP/dt) den Grenzwert überschreitet, wird eine Leckage festgestellt wird und der Ort der Leckage zwischen den beiden Ventilen 16 und 22 geortet.

Während des Prüfmodus können die anderen Abschnitte in den Zirkulationsleitungen 12 und 14 entweder gleichzeitig oder nacheinander in der zuvor beschriebenen Weise auf das Vorhandensein einer Leckage geprüft werden.

Dir Prüfung der Zuleitung 6 und der Ableitung 8 kann während des Prüfmodus geprüft werden, indem die Ventile 16, 18, 21, 22, 24 und 27 geschlossen werden, während die Ventile 20 und 26 geöffnet bleiben. Dann kann mittels der Druckwerte des Drucksensors 33 der zeitliche Verlauf der Druckveränderung in der zuvor beschriebenen Weise erfasst aufgezeichnet und ausgewertet werden.

Bei dem zuvor beschriebenen Prüfmodus wird bei der Auswertung der Druckwerte beispielsweise ein Grenzwert zwischen 5 und 10 mbar/min verwendet. Dabei ist zu beachten, dass der Druckabfall nicht konstant ist, sondern über die Zeit nach dem Schließen der Ventile abnimmt. Da jedoch die zu erwartenden Leckageraten gering sind, ist ein Einfluss dieses Effektes unwahrscheinlich.

Eine Alternative zu dem zuvor beschriebenen Verfahren zum Detektieren und Orten einer Leckage in einem Wasserleitungssystem besteht darin, dass während einer Lernphase ein stationärer Nenndruck (Pₙ) in Zeiträumen bestimmt wird, in denen keine Wasserentnahmen aus einem Abschnitt eines Leitungssystems, also eines oder mehrerer der Zirkulationsleitungen 10, 12 oder 14, auftritt. Diese Zeiträume können in dem zeitlichen Verlauf des Druckes, gemessen von den Drucksensoren 28, 30, 32 und/oder 33, als horizontal verlaufende Abschnitte bestimmt werden. Der so ermittelte Nenndruck (Pₙ) wird gespeichert und für die nachfolgende Überwachung verwendet.

Dann, wenn im laufenden Betrieb der stationäre Nenndruck (Pₙ) innerhalb des Wasserleitungssystems an den Drucksensoren 28, 30, 32 und/oder 33 nicht erreicht wird, kann dieses Verhalten auf eine Leckage hinweisen und ein Prüfmodus wird aktiviert, wie er zuvor beschrieben worden ist, um die Leckage zu detektieren und ggf. zu orten.

Ein weiteres Ausführungsbeispiel eines Verfahrens zum Detektieren einer Leckage in einem Wasserleitungssystem wird nachfolgend beschrieben.

Während einer Lernphase wird mittels der Pumpe 5 Wasser durch das Wasserleitungssystem gepumpt, wobei ein Wert oder nacheinander mehrere Werte einer Fördermenge vorgegeben werden. Für jede der mindestens einen Fördermenge wird die stationäre Leistungsaufnahme der Pumpe 5 gemessen und gespeichert.

Wenn im laufenden Betrieb für eine der vorgegebenen Fördermengen die aktuelle Leistungsaufnahme der Pumpe 5 den Wert der stationären Leistungsaufnahme um ein vorgegebenes Maß unterschreitet, wird eine Leckage festgestellt. Somit dient die Verringerung der Leistungsaufnahme der Pumpe 5 als Maß für das Vorliegen einer Leckage. Diesem Verfahren liegt die Erkenntnis zugrunde, dass eine Leckage in einem Leitungssystem den Strömungswiderstand verringert, so dass bei gleicher Fördermenge eine geringere Leistungsaufnahme für die Erzeugung der Fördermenge ausreicht.

Der Wert der Leistungsaufnahme kann beispielsweise als elektronischer Messwert der Pumpe 5 bestimmt werden. Somit liefert die Pumpe selbst den relevanten Messwert.

Die Leistungsaufnahme der Pumpe 5 kann aber auch als mathematisches Produkt aus dem am Ausgang der Pumpe gemessenen Druck und der Fördermenge bestimmt werden. Die Änderung der Leistungsaufnahme kann für eine Leckagerate von 0,04 l/min im Bereich von 0,1 Watt liegen und ist somit einfach detektierbar.

## Patentansprüche

1. Anordnung zum Detektieren und Orten einer Leckage in einem Wasserleitungssystem,
- mit einer Wasseraufbereitung (4),
- mit einer Pumpe (5),
- mit einer Zuleitung (6) und einer Ableitung (8),
- mit mindestens einer an der Zuleitung (6) und der Ableitung (8) angeschlossenen Zirkulationsleitung (10, 12, 14),
- mit mindestens einem Eingangsventil (16, 18, 20, 21), mindestens einem Ausgangsventil (22, 24, 26, 27) und mindestens einem Drucksensor (28, 30, 32, 33) in mindestens einer Zirkulationsleitung (10, 12, 14) und/oder der Zuleitung (6) und der Ableitung (8), wobei das Eingangsventil (16, 18, 20, 21) und das Ausgangsventil (22, 24, 26, 27) elektrisch steuerbar sind,
- mit Steuermitteln (34) zum Ansteuern der Eingangsventile (16, 18, 20, 21) und der Ausgangsventile (22, 24, 26, 27),
- mit Erfassungsmitteln (36) zum Erfassen des zeitlichen Verlaufs der Messwerte (P) des mindestens einen Drucksensors (28, 30, 32, 33),
- mit Auswertemitteln (38) zum Auswerten des zeitlichen Verlaufs der Druckveränderung (dP/dt) und zum Vergleichen des Betrages der Druckveränderung (dP/dt) mit einem Grenzwert und
- mit Ausgabemitteln (40) zum Ausgeben eines eine Leckage anzeigenden Anzeigesignals, wenn der Betrag der Druckveränderung (dP/dt) den Grenzwert überschreitet.

2. Anordnung nach Anspruch 1,
**dadurch gekennzeichnet,**
**dass** der Grenzwert zwischen 5 und 10 mbar/min beträgt.

3. Verfahren zum Detektieren und Orten einer Leckage in einem Wasserleitungssystem,
- bei dem während einer Lernphase das zeitliche Nutzungsverhalten anhand der Wasserentnahmen aus zumindest einem Abschnitt eines Leitungssystems bestimmt wird,
- bei dem mindestens ein Zeitfenster bestimmt wird, in dem die Wahrscheinlichkeit der Entnahme von Wasser aus dem Abschnitt minimal ist,
- bei dem bei Erreichen des Zeitfensters ein Prüfmodus aktiviert wird,
- bei dem zu Beginn des Prüfmodus ein Abschnitt mittels zweier Ventile abgesperrt wird,
- bei dem der Wasserdruck in dem Abschnitt über eine vorgegebene Zeitdauer gemessen und die Druckveränderung (dP/dt) berechnet wird,
- bei dem die Druckveränderung (dP/dt) mit einem Grenzwert verglichen wird und
- bei dem dann, wenn der Betrag der Druckveränderung (dP/dt) den Grenzwert überschreitet, eine Leckage festgestellt wird und der Ort der Leckage zwischen den beiden Ventilen geortet wird.

4. Verfahren zum Detektieren und Orten einer Leckage in einem Wasserleitungssystem,
- bei dem während einer Lernphase ein stationärer Nenndruck (Pₙ) in Zeiträumen bestimmt wird, in denen keine Wasserentnahmen aus zumindest einem Abschnitt eines Leitungssystems auftritt,
- bei dem dann, wenn im laufenden Betrieb der stationäre Nenndruck (Pₙ) nicht erreicht wird, ein Prüfmodus aktiviert wird,
- bei dem zu Beginn des Prüfmodus ein Abschnitt mittels zweier Ventile abgesperrt wird,
- bei dem der Wasserdruck in dem Abschnitt über eine vorgegebene Zeitdauer gemessen und die Druckveränderung (dP/dt) berechnet wird,
- bei dem die Druckveränderung (dP/dt) mit einem Grenzwert verglichen wird und
- bei dem dann, wenn der Betrag der Druckveränderung (dP/dt) den Grenzwert überschreitet, eine Leckage festgestellt wird und der Ort der Leckage zwischen den beiden Ventilen geortet wird.

5. Verfahren nach Anspruch 3 oder 4,
dass der Grenzwert zwischen 5 und 10 mbar/min beträgt.

6. Verfahren zum Detektieren einer Leckage in einem Wasserleitungssystem,
- bei dem während einer Lernphase mittels einer Pumpe Wasser durch das Wasserleitungssystem gepumpt wird, wobei mindestens ein Wert einer Fördermenge vorgegeben wird,
- bei dem für jede der mindestens einen Fördermenge die stationäre Leistungsaufnahme der Pumpe gemessen und gespeichert wird und
- bei dem dann, wenn im laufenden Betrieb für eine der vorgegebenen Fördermengen die aktuelle Leistungsaufnahme der Pumpe den Wert der stationären Leistungsaufnahme um ein vorgegebenes Maß unterschreitet, eine Leckage festgestellt wird.

7. Verfahren nach Anspruch 6,
bei dem die Leistungsaufnahme als elektronischer Messwert der Pumpe verwendet wird.

8. Verfahren nach Anspruch 6,
bei dem die Leistungsaufnahme der Pumpe als mathematisches Produkt aus dem am Ausgang der Pumpe gemessenen Druck und der Fördermenge bestimmt wird.
